# EUROPÄISCHE PATENTSCHRIFT

(11) **EP 1 424 118 B1**
(45) Veröffentlichungstag und Bekanntmachung des Hinweises auf die Patenterteilung: **27.04.2016**
(21) Anmeldenummer: 03103785.6
(22) Anmeldetag: 14.10.2003
(51) Int. Cl.: B01D 29/11, B01D 29/21, B01D 29/23, B01D 39/16, B01D 39/18

(54) **Flüssigkeitsfilterelement**
Liquid filter element
Elément filtrant liquide

(30) Priorität: 29.11.2002 DE 10255701
(43) Veröffentlichungstag der Anmeldung: 02.06.2004
(73) Patentinhaber: MANN+HUMMEL GmbH, 71638 Ludwigsburg (DE)
(72) Erfinder: Harenbrock, Michael, 71640, Ludwigsburg (DE)

(56) Entgegenhaltungen:
- EP-A- 0 685 251
- EP-A- 1 236 490
- DE-A- 4 416 577
- US-A- 5 904 846

## Beschreibung

### Gebiet der Erfindung

Die vorliegende Erfindung betrifft ein Flüssigkeitsfilterelement, insbesondere Ölfilterelement, bestehend aus einem ringförmig angeordneten, insbesondere zickzackförmig gefalteten Filtermedium mit einer an mindestens einer Stirnseite des Filterelements angeordneten Kunststoffendscheibe.

### Hintergrund der Erfindung, Stand der Technik

Rundfilterelemente mit Endscheiben als Abschluss sind allgemein bekannt. So offenbart bspw. die DE 198 13 320 A1 eine Endscheibe für ein ringförmiges, radial durchströmbares Filter, die radial innen und/oder außen mit einem radial wirkenden Dichtring aus einem gegenüber dem Material der Endscheibe elastischeren Material versehen ist. Diese Endscheibe zeichnet sich dadurch aus, dass zumindest einer der Dichtringe über seinen gesamten Umfang jeweils dicht einerseits direkt mit einem axialen Stirnflächenbereich des Filtermaterials und andererseits mit der diesen Bereich freilassenden Endscheibe verbunden ist. Die Verbindung mit dem Filterbahnmaterial erfolgt mittels Anschmelzen des thermoplastischen Endscheibenmaterials.

In der DE 42 25 144 C2 ist ein Ringfilterelement aus einem ringförmig angeordneten Filtermaterial, das insbesondere ein zickzackförmig gefaltetes Filterbahnmaterial sein kann, mit einem die Stirnseiten jeweils durch Verbindung mit dem Filtermaterial dicht abdeckenden, platten- oder folienförmigen Dichtmaterial, auf das an mindestens einer Stirnseite des Filterelementes eine Ringscheibe aus aufschmelzbarem, verformbarem Material durch eine Schmelzverbindung dicht aufgebracht ist, wobei die Ringscheibe ein auf das Dichtmaterial aufgeschmolzenes Vlies ist und wobei dieses Vlies das Dichtmaterial radial innen und/oder außen ringförmig überragt.

Die DE 44 41 608 C2 zeigt eine Filteranordnung mit Dichtungen an mindestens einer der Stirnseiten und an radial innenliegenden, an einem Mittelrohr anliegenden Bereichen eines zickzackförmig gefalteten Filterelements, wobei die Dichtungen aus einer, unter Wärmeentwicklung verflüssigbaren elastischen Masse gebildet sind und die Masse nach ihrer Aushärtung in die zickzackförmige Faltung des Filterelements hineinreicht und mit ihrer Restelastizität eine Dichtung gegenüber den an die Filteranordnung anfügbaren Anschlussteilen bildet.

Aus der DE 101 06 734 A1 ist ein Verfahren zur Herstellung einer Verbindung zwischen einem fluidundurchlässigen, plastifizierbaren Kunststoff- und einem fluidduchlässigen, nicht plastifizierbaren Filtermaterial durch Anschmelzen des thermoplastischen Endscheibenmaterials bekannt, wobei die hierzu erforderliche Wärme mittels eines Infrarotstrahlers aufgebracht wird.

Diese bekannten Lösungen haben den Nachteil, dass die verwendeten Cellulose-Filtermedien beim Eintauchen in die Kunststoffschmelze thermisch vorgeschädigt werden, so dass die Verbindung eine Sollbruchstelle darstellt.

Aus der DE 44 165 77 A1 ist ein Filterelement mit einer Kunststoffendscheibe, welche mit Filtermedium aus Kunststoffvlies und/oder Papier verschweißt ist.

Aus der EP 06 85 251 A1 ist ein Filterelement mit einer Endscheibe aus Vliesmaterial bekannt, welche mit dem Filtermedium verschweißt ist.

### Zusammenfassung der Erfindung

Es ist die Aufgabe der vorliegenden Erfindung, ein Rundfilterelement mit mindestens einer Kunststoffendscheibe bereit zu stellen, wobei die Verbindung zwischen Kunststoffendscheibe und Filtermedium verbessert ist.

Diese Aufgabe wird durch das Rundfilterelement nach Anspruch 1 und durch das Verfahren nach Anspruch 4 gelöst.

Weitere vorteilhafte Ausgestaltungen sind in den Unteransprüchen enthalten.

### Detaillierte Beschreibung der Ausführungsbeispiele

Eine alternative Methode zu den häufig eingesetzten Klebeverfahren zur dauerhaften Verbindung von Papierbalg und Endscheibe von Filterelementen ist das sogenannte Spiegelschweissen. Dabei wird die Kunststoffendscheibe mittels eines IR-Strahlers oder eines Heizelementes oberflächlich angeschmolzen, wobei im Bereich der Ölfilterelemente die Verwendung von Polyamid als Endscheibenmaterial wegen der guten Öl- und Temperaturbeständigkeit vorteilhaft ist. Hierbei werden Oberflächentemperaturen deutlich oberhalb des Schmelzpunktes des Polyamids erreicht. Anschliessend wird der Papierbalg in die Schmelze eingedrückt. Beim Abkühlen des Filterelementes erstarrt Kunststoffschmelze, woraus eine mechanische Retention zwischen Filtermedium und Endscheibe resultiert.

Da die hierfür eingesetzten Cellulose-Filtermedien beim Eintauchen in die Kunststoffschmelze jedoch thermisch vorgeschädigt werden, wird dabei in das Element in der Nähe des Abschlussdeckels ungewollt eine Sollbruchstelle eingebracht. Schädigungsmechanismen sind u.a. die Verringerung der Festigkeit der Cellulosefasern durch thermisch induzierten Kettenbruch oder Depolimerisation sowie durch Verringerung der Festigkeit des Cellulosefaserverbundes durch interne Etherbildung oder Verhornung.

Um diesen Mangel zu beheben, wird erfindungsgemäss bei der Herstellung des Filterelements ein durch thermoplastische Fasern verstärktes Filtermedium verwendet, das mittels Spiegelschweissen mit der Kunststoffendscheibe verbunden wird..

Durch den Zusatz von thermoplastischen Fasern wird durch Verschmelzen der Materialien eine zusätzliche Verstärkung der Verbindungsfläche zwischen Filtermedium und Kunststoffendscheibe erreicht, da es zu einer innigen Vermischung von Endscheiben- und Fasermaterial kommt. So konnte bei Zugversuchen gealterter Filterelemente mit einem Filtermedium aus reiner Cellulose festgestellt werden, dass die Kunststoffendscheibe und das Filtermedium an der Verschweissungsstelle glatt voneinander getrennt wurde, während es bei erfindungsgemässen Elementen mit Zusatz von thermoplastischen Fasern ausschließlich zu einem Bruch der Endscheibe kam, wobei die ermittelten Abzugswerte des erfindungsgemäßen Filterelements deutlich höher sind.

Der Thermoplastanteil am Filtermedium kann besonders bevorzugt bei einem Wert von ca. 20 Gew.-% liegen. Vorzugsweise bestehen die eingesetzten Kunstfasern aus Polyester. Es kann aber jeder Kunststoff verwendet werden, dessen Erweichungs-/Schmelztemperatur unterhalb der Oberflächentemperatur der angeschmolzenen Kunststoffendscheibe liegt, also bspw. Polyamid (PA), Poly(ethylenterephthalat)(PET), Polymethylmethacrylat (PMMA), Polyoxymethylen (POM), Polyphenylensulfid (PPS), Polybutylenterephthalat (PBT), Polyacrylnitril (PAN), und dgl.

Das erfindungsgemässe Flüssigkeitsfilterelement kann vor allem als Ölfilter eingesetzt werden, da hier als Endscheibenmaterial vorzugsweise Polyamid zum Einsatz kommt, und dieses zum Anschmelzen auf eine für Cellulose kritische Temperatur gebracht werden muss. Eine Verwendung als Kraftstoff-, Hydraulik-, Luft- oder Getriebefilter ist ebenfalls möglich. Insbesondere bei Kraftstofffiltern besteht das Problem darin, dass die oben beschriebene mechanische Retention durch Eindringen und Erstarren der Kunststoffschmelze im Cellulosefaserhaufwerk schwerer zu realisieren ist, da die eingesetzten Filtermedien wegen der höheren Abscheideforderungen feiner, d.h., feinporiger sind. In diese feinen Poren dringt die Kunststoffschmelze deutlich schlechter ein, so dass es hier um so wichtiger ist, eine zusätzliche Stabilisierung durch das erfindungsgemässe Einschmelzen von Kunstfasern in das Material der Endscheibe zu erzielen.

## Patentansprüche

1. Flüssigkeitsfilterelement, bestehend aus einem ringförmig angeordneten, insbesondere zickzackförmig gefalteten Filtermedium mit einer an mindestens einer Stirnseite des Filterelements angebrachten Kunststoffendscheibe, wobei als Filtermedium ein zumindest teilweise plastifizierbares Material verwendet wird, das mittels Spiegelschweissen mit der Kunststoffendscheibe verbindbar ist, **dadurch gekennzeichnet, dass** das Filtermedium aus mit thermoplastischen Fasern verstärkter Cellulose besteht.

2. Flüssigkeitsfilterelement nach Anspruch 1, **dadurch gekennzeichnet, dass** der Anteil an thermoplastischen Fasern 20 Gew.-% beträgt.

3. Flüssigkeitsfilterelement nach Anspruch 2, **dadurch gekennzeichnet, dass** die Fasern aus einem, Material, ausgewählt aus der Gruppe bestehend aus Polyamid (PA), Poly(ethylenterephthalat) (PET), Polymethylmethycrylat (PMMA), Polyoxymethylen (POM), Polyphenylensulfid (PPS), Polybutylenterephthalat (PBT), Polyacrylnitril (PAN), und dgl. bestehen.

4. Verfahren zum Herstellen eines Flüssigkeitsfilterelements nach einem der Ansprüche 1 bis 3, wobei ein Filtermedium verwendet wird, das thermoplastische Fasern enthält, und dass das Filtermedium durch Spiegelschweissen mit mindestens einer Kunststoffendscheibe verbunden wird, **dadurch gekennzeichnet, dass** das Filtermedium aus mit thermoplastischen Fasern verstärkter Cellulose besteht.

## Claims

1. Liquid filter element, consisting of an annularly disposed, in particular zigzagfolded filter medium, with a plastic end plate attached to an at least one front side of the filter element, wherein an at least partially plasticizable material is used as filter medium which is connectable with the plastic end plate by means of butt welding, **characterized in that** the filter medium is made of cellulose reinforced by thermoplastic fibers.

2. Liquid filter element according to claim 1, **characterized in that** the proportion of thermoplastic fibers amounts to 20 % by weight.

3. Liquid filter element according to claim 2, **characterized in that** the fibers consist of a material, selected from the group consisting of polyamide(PA), poly(ethylen terephthalat) (PET), polymethyl methacrylate (PMMA), polyoxymethylene (POM), polyphenylene sulfide (PPS), polybutylene terephthalate (PBT), polyacrylonitrile (PAN) and the like.

4. Method for manufacturing a liquid filter element according to one of the claims 1 to 3, wherein a filter element is used which contains thermoplastic fibers, and that the filter medium is connected with at least one plastic end plate by butt welding, **characterized in that** the filter medium consists of cellulose reinforced by thermoplastic fibers.

## Revendications

1. Élément de filtre à liquide, composé d'un milieu filtrant disposé de manière annulaire, en particulier plié en accordéon, avec un disque d'extrémité en plastique monté sur au moins une face frontale de l'élément filtrant, une matière plastifiable, au moins en partie, étant utilisée en tant que milieu filtrant et pouvant être connectée au disque d'extrémité en plastique par soudage au miroir, **caractérisé en ce que** le milieu filtrant est constitué de cellulose renforcée par fibres thermoplastiques.

2. Élément de filtre à liquide selon la revendication 1, **caractérisé en ce que** la part de fibres thermoplastiques est de 20 % en poids.

3. Élément de filtre à liquide selon la revendication 2, **caractérisé en ce que** les fibres sont exécutées dans une matière appartenant au groupe constitué de polyamide (PA), de polyéthylène téréphthalate (PET), de polyméthycrylate de méthyle (PMMA), de polyoxyméthylène (POM), de polysulfure de phénylène (PPS), de polybutène téréphtalate (PBT), de polyacrylonitrile (PAN) ou de substances analogues.

4. Procédé de fabrication d'un élément de filtre à liquide selon l'une des revendications 1 à 3, un milieu filtrant contenant des fibres thermoplastiques étant utilisé et le milieu filtrant étant connecté à au moins un disque d'extrémité en plastique par soudage au miroir, **caractérisé en ce que** le milieu filtrant est constitué de cellulose renforcée par fibres thermoplastiques.
